# EUROPÄISCHE PATENTSCHRIFT

(11) **EP 3 283 788 B1**
(45) Veröffentlichungstag und Bekanntmachung des Hinweises auf die Patenterteilung: **21.07.2021**
(21) Anmeldenummer: 16720337.1
(22) Anmeldetag: 07.04.2016
(51) Int. Cl.: F16H 1/46, H02K 7/116, F16H 57/023, F16H 57/00

(54) **GETRIEBEMOTOR UND VERFAHREN ZUR MONTAGE EINES GETRIEBEMOTORS**
GEARED MOTOR AND METHOD FOR ASSEMBLING A GEARED MOTOR
MOTORÉDUCTEUR ET PROCÉDÉ DE MONTAGE D'UN MOTORÉDUCTEUR

(30) Priorität: 16.04.2015 DE 102015206933
(43) Veröffentlichungstag der Anmeldung: 21.02.2018
(73) Patentinhaber: Bühler Motor GmbH, 90459 Nürnberg (DE)
(72) Erfinder: GUTTENBERGER, Richard, 91171 Greding (DE)
(86) Internationale Anmeldenummer: PCT/DE2016/200176
(87) Internationale Veröffentlichungsnummer: WO 2016/165706

(56) Entgegenhaltungen:
- DE-A1- 10 300 641
- DE-A1-102008 030 006
- DE-C1- 19 729 988
- JP-A- 2009 036 071

## Beschreibung

Die Erfindung betrifft einen Getriebemotor (1), bestehend aus einem Gleichstrommotor (2) mit einer Motorwelle (3), einem Planetengetriebe (4) mit einem Sonnenrad (5), mehreren Planetenrädern (6), einem Hohlrad (7), einem Getriebegehäuse (8), einer Getriebeausgangswelle (9) und einem Planetenträger (24), wobei die Planetenräder (6) mit Verzahnungen des Hohlrads (7) in Eingriff sind.

Aus der DE 19729988 C1 ist ein Getriebemotor bekannt, bei welchem ein Planetengetriebe an einen Elektromotor durch eine Schnappverbindung montierbar ist. Das Sonnenrad ist beim Fügevorgang mit der Welle fest verbunden. Aus diesem Grund ist es erforderlich, dass die Außenverzahnung des Sonnenrads mit drei Planetenrädern gleichzeitig in Eingriff kommt. Hierbei kommt es häufig zu Fügeproblemen, weil die Winkelposition der Planetenräder untereinander und zum Hohlrad sich nicht automatisch korrekt ausrichten. Dies führt mindestens zu einer Verringerung der Montagegeschwindigkeit. Es kann aber auch zu Beschädigungen der Verzahnung kommen und damit im Betrieb zu Geräuschentwicklungen. Die Problematik besteht insbesondere darin, dass der Fügeprozess ohne Kontrollmöglichkeit in einem geschlossenen Gehäuse erfolgen muss.

Die nächstliegende JP 2009 036071 A offenbart einen Getriebemotor bestehend aus einem Gleichstrommotor mit einer Motorwelle, einem Planetengetriebe mit einem Sonnenrad, mehreren Planetenrädern, einem Hohlrad, einem Getriebegehäuse, einer Getriebeausgangswelle und einem Planetenträger, wobei die Planetenräder mit Verzahnungen des Hohlrads in Eingriff sind, wobei das Planetengetriebe aus einem oder mehreren Planetengetriebestufen besteht, alle Sonnenräder, alle Planetenräder und alle Planetenträger durch eine mit einem Wellendurchgang versehene Scheibe axial im Getriebegehäuse gehalten sind und eine Vormontagebaugruppe bilden, das motorseitig erste Sonnenrad eine zentrale Wellenaufnahme aufweist, welche mit einer in Drehrichtung wirkenden Formschlusskontur ausgebildet ist und mit der Motorwelle über eine korrespondierende Formschlusskontur drehfest oder unter Belassung eines Drehspiels gekuppelt ist und wobei in der Vormontagebaugruppe nach einer Endmontage des Gleichstrommotors an die Vormontagebaugruppe ein Verzahnungseingriff des ersten Sonnenrads mit Verzahnungen der ersten Planetenräder gegeben ist.

Aus der DE 103 00 641 A1 ist ein Stellantrieb, der aus einem Gehäuse, in welchem ein Elektromotor mit Ritzel angeordnet ist und das Ritzel mit mindestens jeweils einem ersten Zahnrad eines Planetengetriebes im Eingriff steht, bekannt. Zwischen dem Elektromotor und dem Planetengetriebe ist eine im Gehäuse fixierte scheibenförmige Lagerung mit mittiger Aussparung für das Ritzel und mindestens einem Fortsatz angeordnet. Die scheibenförmige Lagerung ist durch die Fortsätze an einem Innenumfangsbereich des Getriebegehäuses verklemmt. Der Innenumfangsbereich des Gehäuses ist verzahnungsfrei und durch eine Anschlagfläche axial begrenzt.

Die DE 10 2008 030006 A1 offenbart einen Aktuator, insbesondere für eine Fahrzeugstelleinrichtung, mit einem Gehäuse, in dem ein Elektromotor angeordnet ist. Der Elektromotor umfasst eine drehend antreibbare Antriebswelle. Der Aktuator enthält in seinem Gehäuse ein Planetengetriebe, das zumindest zwei Getriebestufen aufweist. Jede Getriebestufe umfasst ein Sonnenrad, das mit wenigstens zwei Planetenrädern in Eingriff steht die an einem Planetenradträger gelagert sind und die mit einem Hohlrad in Eingriff stehen. Die antriebsseitige Getriebestufe ist mit dem Sonnenrad drehfest mit der Antriebswelle verbunden, während bei der abtriebsseitigen Getriebestufe der Planetenradträger drehfest mit der Abtriebswelle verbunden ist. Für die wenigstens zwei Getriebestufen ist ein gemeinsames Hohlrad vorgesehen, mit dem die Planetenräder der Getriebestufen in Eingriff stehen.

Aufgabe der Erfindung ist es daher die Komplettmontage des Planetengetriebes unabhängig von der Endmontage am Gleichstrommotor vornehmen zu können, wobei die Montage der Getriebebauteile gut überwacht werden kann, die Verzahnungen bei der Montage keine Beschädigungen erfahren und deshalb als Geräuschquelle weitgehend ausscheiden, wobei der Bauraum in axialer Richtung optimiert ist und die Montage des Planetengetriebes am Gleichstrommotor einfach und problemlos durchführbar ist.

Diese Aufgabe wird erfindungsgemäß durch die Merkmale des Vorrichtungsanspruchs 1 und des Verfahrensanspruchs 19 gelöst. Da die Planetenräder (6), das Sonnenrad (5) und die Getriebeausgangswelle (9) durch eine mit einem Wellendurchgang (11) versehenen Scheibe (10) im Getriebegehäuse (8) gehalten sind und eine Getriebebaugruppe bilden, lässt sich das Planetengetriebe problemlos vormontieren und Zwischenlagern. Das Sonnenrad (5) ist dabei verliersicher bereits in der Betriebsposition angeordnet und mit den Verzahnungen der Planetenräder in Eingriff. Dabei weist das Sonnenrad (5) eine Wellenaufnahme (29) auf, welche mit einer in Drehrichtung wirkenden Formschlusskontur ausgebildet ist und mit der Motorwelle (3) drehspielfrei oder unter Belassung eines Drehspiels verbunden ist. Dadurch lässt sich eine sichere Drehmitnahme zwischen Motorwelle und Sonnenrad gewährleisten. Durch die Vormontage lässt sich auch die Baulänge reduzieren, weil das Sonnenrad (Motorritzel) keine Vorstecklänge aufweisen muss. Die Erfindung lässt sich auf ein- und mehrstufige Planetengetriebe gleichermaßen anwenden. Um eine Axialsicherung zu optimieren ist die Scheibe (10) mit einer Ringfläche als Sonnenradanlauffläche (15) versehen. Die Sonnenradanlauffläche (15) ist dabei so gestaltet, dass sie im Betrieb keine hohen Reibungskräfte erzeugt. Aus diesem Grund springt die Sonnenradanlauffläche (15) axial gegenüber einer radial außen anschließenden Ringfläche (18) vor. Generell soll zwischen dem Sonnenrad (5) und der Scheibe (10) ein geringes Spiel vorhanden sein, damit keine Bremswirkung auftritt.

Weiterbildungen der Erfindung werden in den Unteransprüchen dargestellt. Die Scheibe (10) soll vorteilhafterweise lediglich als dünne Anlaufscheibe und als Haltebauteil für die Getriebebauteile vor der Endmontage und nicht als Getriebegehäusebauteil dienen. Dadurch wird axialer Bauraum eingespart, weil auf ein zusätzliches Gehäuseteil verzichtet werden kann. Die Scheibe (10) erlaubt eine größere Flexibilität in der Fertigung und in der Logistik der Teilebereitstellung, weil das Planetengetriebe unabhängig vom Gleichstrommotor vormontierbar ist.

Die Scheibe (10) kann je nach Anforderung formschlüssig oder kraftschlüssig mit dem Getriebegehäuse (8) verbunden sein. Als Formschluss eignet sich z. B. eine Bajonettverbindung.

Alternativ wird eine Klemmverbindung vorgeschlagen, wobei die Scheibe (10) einen äußeren Ringbereich (16) aufweist, in welchem Freisparungen (14) vorgesehen sind, durch welche Klemmzungen (12) begrenzt sind. Die Freisparungen (14) bewirken eine leichtere Auslenkbarkeit der Klemmzungen. Die Freisparungen sind beispielhaft als Schlitze ausgeführt, deren Tiefe variiert werden kann um die Federeigenschaften anzupassen.

Die so gestaltete Scheibe (10) eignet sich hervorragend zur Sicherung der vorher montierten Getriebebauteile im Getriebegehäuse, indem sich deren Klemmzungen (12) an einem Innenumfangsbereich (13) des Getriebegehäuses (8) verklemmen.

Zweckmäßigerweise sollte die Scheibe aus Metall oder Kunststoff bestehen. Beide lassen sich einfach herstellen. Welches Material verwendet wird hängt von den zu erwartenden mechanischen Belastungen oder dem Motorkonzept ab.

Wie auch im Stand der Technik bereits praktiziert, wurde vorgeschlagen, dass das Hohlrad (7) mit dem Getriebegehäuse (8) einstückig ist. Hierdurch entfallen Montagezeiten und es verringert sich die Teileanzahl.

Besonders vorteilhaft ist es, wenn der Innenumfangsbereich (13) des Getriebegehäuses (8) verzahnungsfrei ist und durch eine Anschlagsfläche (31) axial begrenzt ist. Hierdurch können die Klemmzungen entsprechend einfach gestaltet werden und müssen nicht in die Verzahnung gefügt werden. Durch den Anschlag wird verhindert, dass die Scheibe zu weit vorgetrieben wird, wodurch es zu Verklemmungen der Getriebebauteile kommen würde. Aufgrund der genauen Herstellbarkeit von technischen Kunststoffteilen, lassen sich die erforderlichen Toleranzen hierbei sehr genau einhalten.

In Weiterbildung der Erfindung ist vorgesehen, dass die Planetenräder (6) auf dem Planetenträger (19) gelagert sind, welcher eine zentrale Lagerausnehmung (20) aufweist und auf den Durchmesser der Motorwelle (3) angepasst ist. Hierdurch lässt sich der Planetenträger auf einem verlängerten Abschnitt der Motorwelle konzentrisch lagern. Die längere Motorwelle ist sinnvoll um vor der Montage des Gleichstrommotors am Planetengetriebe, ein leichtes Finden des Formschlusses im Sonnenrad zu ermöglichen, ohne die Baulänge des Getriebemotors zu vergrößern.

Grundsätzlich lässt sich die Erfindung auf eine beliebige Stufenzahl anwenden. Zumindest ist vorgesehen, dass der Planetenträger (19) mit einem Sekundärsonnenrad (21) einstückig ist, welches mit Sekundärplanetenrädern (22) in Eingriff ist und die Sekundärplanetenräder (22) mit der Verzahnung (23) des Hohlrades (7) in Eingriff sind. Am einfachsten lässt sich das Getriebe herstellen, indem das Hohlrad durchgängig von der ersten bis zur letzten Planetengetriebestufe mit der identischen Innenverzahnung ausgeführt ist.

Sinnvollerweise sollten die Sekundärplanetenräder (22) auf einem Sekundärplanetenträger (24) gelagert sein, welcher einstückig mit der Getriebeausgangswelle (9) ist.

Die Teileanzahl lässt sich weiter verringern, indem die Getriebeausgangswelle (9) in einer mit dem Getriebegehäuse (8) einstückigen Lagerhülse (25) gelagert ist und die Länge einer ringförmigen Lagerfläche größer ist als der Durchmesser der Getriebeausgangswelle (9). Die Getriebeausgangswelle kann dabei aus einem Kunststoffmaterial ausgeführt sein.

Eine einfache Montage des Planetengetriebes wird dadurch erleichtert, dass das Getriebegehäuse (8) mit Schnappmitteln einstückig ist. Beim Urformvorgang werden die Verbindungsmittel ohne Mehraufwand mitgespritzt. Die Schnappmittel sind insbesondere in Form von rahmenartigen Schnappfenstern (26) ausgebildet.

Da auch die Verwendung von Standardmotoren häufig wirtschaftlich interessant ist, kann es sinnvoll sein einen Adapter als Schnittstelle zwischen dem Gleichstrommotor und dem Planetengetriebe vorzusehen. Dieser Adapter wird dann so gestaltet, dass er mit Schnappmitteln einstückig ist, welche mit den Schnappfenstern (26) des Getriebegehäuses korrespondieren. Hierfür eignen sich Schnappnasen, die am Umfang des Adapters (28) angeordnet sind.

Eine bauraumsparende Alternative zu einer Schnappverbindung besteht in der Möglichkeit das Getriebegehäuse mit dem Adapter zu verschweißen.

Eine zweite Lösung der Erfindung ist durch ein Verfahren zur Montage des

Getriebemotors nach Anspruch 1 gegeben, wobei das Getriebegehäuse (8) mit dem Hohlrad (7) einstückig ist und die Getriebeausgangswelle (9) mit dem Planetenträger (24) einstückig ist. Die erfindungsgemäßen Montageschritte sind dabei: a) Bereitstellen des Getriebegehäuses (8), der Getriebeausgangswelle (9), den Planetenrädern (6), des Sonnenrads (5) und der Scheibe (10); b) axiale Montage der Getriebeausgangswelle (9) in das Getriebegehäuse (8); c) axiale Montage der Planetenräder (6) auf den Planetenträger (24) und in das Hohlrad (7) des Getriebegehäuses (8); d) axiale Montage des Sonnenrads (5) und in Eingriff bringen mit den Planetenrädern (6); e) Montage der Scheibe (10) in das Getriebegehäuse (8); f) Finden der korrekten Winkellage zwischen Motorwelle (3) und Sonnenrad (5); g) Einführen der Motorwelle (3) in das Sonnenrad (5). Das Finden der korrekten Winkellage kann dabei manuell oder durch einen Automatismus erfolgen. In jedem Fall ist eine ausreichende visuelle Kontrollmöglichkeit dieses Fügevorgangs gegeben. Beschädigungen der Getriebezähne können durch diese Montageweise ausgeschlossen werden.

Dadurch, dass die Motorwelle (3) über das Sonnenrad (5) hinaus in eine Lagerausnehmung (20) des Planetenträgers (19) eingeführt wird, kann die Länge der Motorwelle (3) deutlich länger gewählt werden als bei einem herkömmlichen Getriebe. Dies erleichtert den Fügevorgang erheblich ohne die Baulänge des Getriebemotors zu beeinflussen.

Es ist vorgesehen, dass das Getriebegehäuse (8) mit einem Adapter (28) oder einem Motorgehäuse mechanisch verbunden wird. Die Verbindung kann durch Schnappen oder auch durch Schweißen hergestellt werden. Als Schweißverfahren wird Laserschweißen bevorzugt, weil dieses sehr bauteilschonend und prozesssicher einsetzbar ist.

Das Montageverfahren lässt sich bei ein- und mehrstufigen Planetengetrieben in gleicher Weise anwenden. Grundsätzlich lässt es sich auch auf andere Getriebetypen anwenden.

Ein Ausführungsbeispiel der Erfindung wird nachfolgend anhand der Zeichnung näher erläutert. Es zeigen:
Fig. 1 eine Draufsicht auf ein Planetengetriebe,
Fig. 2 ein Schnitt B-B des Planetengetriebes,
Fig. 3 eine räumliche Darstellung einer Scheibe,
Fig. 4 das Planetengetriebe und einen Gleichstrommotor vor der Endmontage,
Fig. 5 einen Schnitt C-C der Anordnung gemäß Fig. 4,
Fig. 6 das Planetengetriebe und den Gleichstrommotor nach der Endmontage und
Fig. 7 einen Schnitt D-D der Anordnung gemäß Fig. 6.

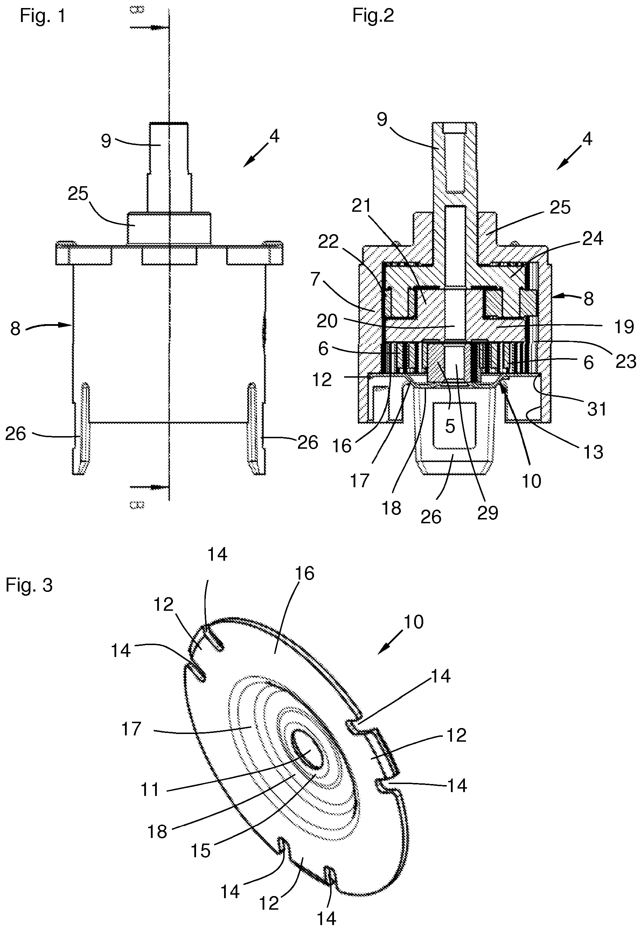

Fig. 1 zeigt eine Draufsicht auf ein Planetengetriebe 4, mit einem Getriebegehäuse 8, einer Lagerhülse 25, einer Getriebeausgangswelle 9 und Schnappfenstern 26. Die Lagerhülse 25 und die Schnappfenster 26 sind einstückig mit dem Getriebegehäuse 8 in einem Urformvorgang hergestellt. Im vorliegenden Beispiel sind zwei Schnappfenster 26 zu erkennen, bei Bedarf lässt sich auch eine höhere Anzahl an Schnappmitteln vorsehen. Die Getriebeausgangswelle 9 ist innerhalb der Lagerhülse 25 aufgenommen und drehbar gelagert.

Fig. 2 zeigt einen Schnitt B-B des Planetengetriebes 4, mit dem Getriebegehäuse 8, den Schnappfenstern 26, der Lagerhülse 25, der Getriebeausgangswelle 9, welche einstückig mit einem Sekundärplanetenträger 24 ist, auf welchem Sekundärplanetenräder 22 drehbar gelagert sind. Die Sekundärplanetenträger 24 sind einerseits mit einer Verzahnung 23 eines Hohlrades 7 und andererseits mit der Verzahnung eines Sekundärsonnenrades 21 in Eingriff. Das Sekundärsonnenrad 21 ist einstückig mit einem eine Lagerausnehmung 20 aufweisenden Planetenträger 19 und trägt Planetenräder 6, welche einerseits mit der Verzahnung 23 des Hohlrades 7 und andererseits mit der Verzahnung eines Sonnenrads 5 in Eingriff ist, wobei das Sonnenrad eine Wellenaufnahme 29 umfasst. Das Sonnenrad 5, die Planetenräder 6, der Planetenträger 19, die Planetenräder 22, und der Planetenträger 24 sind axial gesichert durch eine Scheibe 10, welche sich radial an einem nicht verzahnten Innenbereich 13 des Getriebegehäuses 8 verkrallt und axial an einer Anschlagsfläche 31 anliegt. Die Anschlagsfläche 31 wird teilweise durch den Verzahnungsbeginn des Hohlrads 7 definiert und erlaubt eine sehr genaue axiale Positionierung der Scheibe. Die Scheibe 10 weist eine Ringfläche 18 und einen äußeren Ringbereich 16 auf, welche durch einen Übergangsbereich 17 miteinander verbunden sind. Die Verklemmung mit dem nicht verzahnten Innenbereich 13 erfolgt über Klemmzungen 12.

Fig. 3 zeigt eine vergrößerte räumliche Darstellung der Scheibe 10, mit einem Wellendurchgang 11, einer Sonnenradanlauffläche 15, der daran anschließenden Ringfläche 18, dem Übergangsbereich 17, dem äußeren Ringbereich 16 und den Klemmzungen 12, welche durch schlitzartige Freisparungen 14 vom äußeren Ringbereich 16 partiell getrennt sind und dadurch eine flachere Federkennlinie erhalten. Die Klemmzungen 12 erstrecken sich radial über den äußeren Ringbereich 16 hinaus, damit eine Verklemmung nur über die Klemmzungen 12 erfolgt.

Zweckmäßigerweise sind drei Klemmzungen mit einem Winkelabstand von 120° vorgesehen, damit sich die Scheibe 10 beim Fügevorgang selbst zentriert. Die Sonnenradanlauffläche 15, die Ringfläche 18 und der äußere Ringbereich 16 mit den Klemmzungen 12 befinden sich in unterschiedlichen axialen Ebenen, wobei die Sonnenradanlauffläche 15 nur geringfügig gegenüber der Ringfläche 18 vorspringt. Der äußere Ringbereich 16 weist einen deutlicheren axialen Abstand von der Ringfläche 18 auf, wobei der Übergangsbereich 17 eine Kegelringfläche bildet. Der axiale Abstand des äußeren Ringbereichs 16 von der Sonnenradanlauffläche und der dadurch geschaffene Raumbereich wird axial vom Sonnenrad 5 (siehe Fig. 2) eingenommen. Die Scheibe kann als Kunststoffbauteil in einer Spritzgussform urgeformt sein oder als metallisches Stanzbiegeteil aus einer Blechtafel oder einem Rollband ausgestanzt sein.

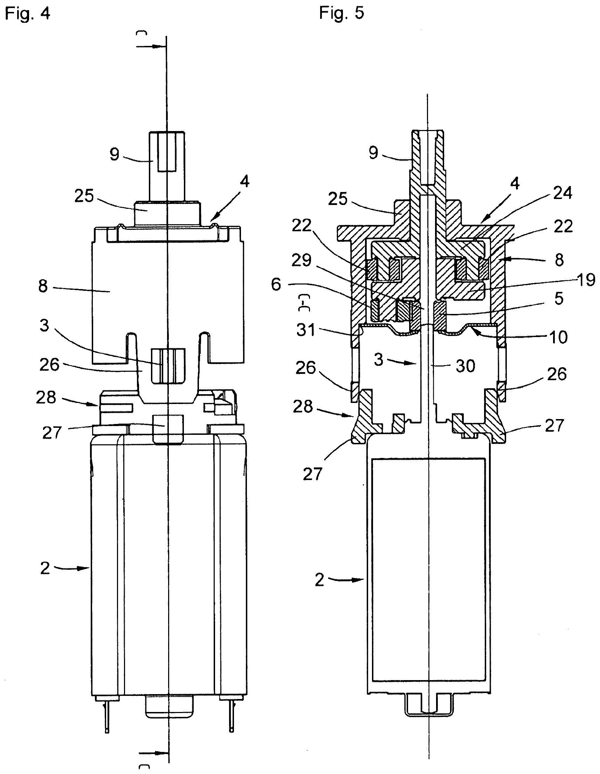

Fig. 4 zeigt das Planetengetriebe 4 und einen Gleichstrommotor 2 vor der Endmontage, mit dem Getriebegehäuse 8, der Lagerhülse 25, der Ausgangswelle 9, dem Schnappfenster 26, der Motorwelle 3, dem Adapter 28 und der Schnappnase 27. Wird die Montage in einer Vorrichtung (nicht dargestellt) durchgeführt, lässt sich eine genaue zentrische Zuordnung zwischen den zu fügenden Bauteilen (Planetengetriebe und Gleichstrommotor) herstellen, so dass sich das Motorwellenende problemlos in die Wellenaufnahme 29 einfügen kann. Um dies weiter zu erleichtern, kann das Wellenende ballig oder kegelstumpfförmig ausgebildet sein und die Wellenaufnahme 29 mit einer kegeligen Einführungsfase versehen sein. Auch die winklige Zuordnung der Schnappmittel (Schnappfenster 26 und Schnappnase 27) lässt sich einfach in der Vorrichtung vornehmen.

Fig. 5 zeigt einen Schnitt C-C der Anordnung gemäß Fig. 4, mit dem Gleichstrommotor 2, der Motorwelle 3, welche eine Abflachung 30 hat und dadurch einen D-förmigen Querschnitt aufweist, den Adapter 28, den Schnappnasen 27, dem Planetengetriebe 4, mit dem Getriebegehäuse 8, den Schnappfenstern 26, dem Sonnenrad 5, der Wellenaufnahme 29, dem Planetenrad 6, dem Planetenträger 19, den Sekundärplanetenrädern 22, dem Sekundärplanetenträger 24, der mit der Getriebeausgangswelle 9 einstückig ist und der Scheibe 10, die an einer Anschlagsfläche 31 des Getriebegehäuses 8 axial anliegt.

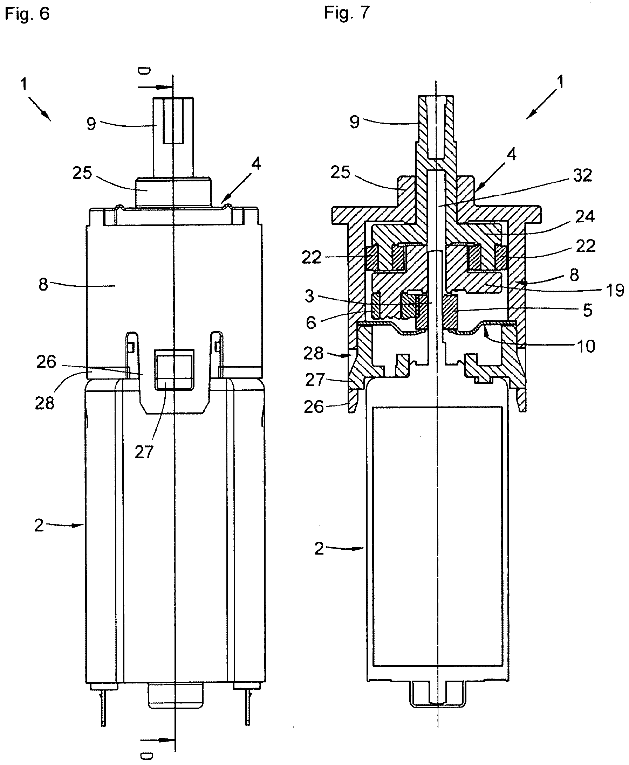

Fig. 6 zeigt das Planetengetriebe 4 und den Gleichstrommotor 2 nach der Endmontage, mit dem Gleichstrommotor 2, dem Adapter 28, den Schnappnasen 27, dem Getriebegehäuse 8, mit den Schnappfenstern 26 und der Lagerhülse 25, sowie der Getriebeausgangswelle 9.

Fig. 7 zeigt einen Schnitt D-D der Anordnung gemäß Fig. 6, mit dem Getriebemotor 2, der Motorwelle 3, dem Adapter 28, den Schnappnasen 27, dem Getriebegehäuse 8 mit den Schnappfenstern 26, der Lagerhülse 25, der Scheibe 10, dem Sonnenrad 5, dem Planetenrad 6, dem Planetenträger 19, den Sekundärplanetenrädern 22, dem Sekundärplanetenträger 24 und der damit einstückigen Getriebeausgangswelle 9. Die Motorwelle 3 ist soweit verlängert, dass sie als Aufnahme für den Planetenträger 19 dient. Die Getriebeausgangswelle 9 ist mit einem zylindrischen Hohlraum 32 geformt, der so ausgelegt ist, dass bei Bedarf die Motorwelle soweit verlängert werden kann, dass sie sich bis in den Bereich der Lagerhülse 25 erstrecken könnte.

### Bezugszeichenliste

| | | | |
|---|---|---|---|
| 1 | Getriebemotor | 29 | Wellenaufnahme |
| 2 | Gleichstrommotor | 30 | Abflachung |
| 3 | Motorwelle | 31 | Anschlagsfläche |
| 4 | Planetengetriebe | 32 | Hohlraum |
| 5 | Sonnenrad | | |
| 6 | Planetenrad | | |
| 7 | Hohlrad | | |
| 8 | Getriebegehäuse | | |
| 9 | Getriebeausgangswelle | | |
| 10 | Scheibe | | |
| 11 | Wellendurchgang | | |
| 12 | Klemmzunge | | |
| 13 | Innenumfangsbereich | | |
| 14 | Freisparung | | |
| 15 | Sonnenradanlauffläche | | |
| 16 | äußerer Ringbereich | | |
| 17 | Übergangsbereich | | |
| 18 | Ringfläche | | |
| 19 | Planetenträger | | |
| 20 | Lagerausnehmung | | |
| 21 | Sekundärsonnenrad | | |
| 22 | Sekundärplanetenräder | | |
| 23 | Verzahnung | | |
| 24 | Sekundärplanetenträger | | |
| 25 | Lagerhülse | | |
| 26 | Schnappfenster | | |
| 27 | Schnappnase | | |
| 28 | Adapter | | |

## Patentansprüche

1. Getriebemotor (1), bestehend aus einem Gleichstrommotor (2) mit einer Motorwelle (3), einem Planetengetriebe (4) mit einem Sonnenrad (5), mehreren Planetenrädern (6), einem Hohlrad (7), einem Getriebegehäuse (8), einer Getriebeausgangswelle (9) und einem Planetenträger (24), wobei die Planetenräder (6) mit Verzahnungen des Hohlrads (7) in Eingriff sind, das Planetengetriebe (4) aus einem oder mehreren Planetengetriebestufen besteht, alle Sonnenräder (5, 21), alle Planetenräder (6, 22) und alle Planetenträger (19, 24) durch eine mit einem Wellendurchgang (11) versehene Scheibe (10) axial im Getriebegehäuse (8) gehalten sind und eine Vormontagebaugruppe bilden, das motorseitig erste Sonnenrad (5) eine zentrale Wellenaufnahme (29) aufweist, welche mit einer in Drehrichtung wirkenden Formschlusskontur ausgebildet ist und mit der Motorwelle (3) über eine korrespondierende Formschlusskontur drehfest oder unter Belassung eines Drehspiels gekuppelt ist und dass in der Vormontagebaugruppe nach einer Endmontage des Gleichstrommotors (2) an die Vormontagebaugruppe ein Verzahnungseingriff des ersten Sonnenrads (5) mit Verzahnungen der ersten Planetenräder (6) gegeben ist, **dadurch gekennzeichnet, dass** die Scheibe (10) eine Ringfläche als Sonnenradanlauffläche (15) aufweist und die Sonnenradanlauffläche (15) axial gegenüber einer radial außen anschließenden Ringfläche (18) vorspringt.

2. Getriebemotor (1) nach Anspruch 1, **dadurch gekennzeichnet, dass** die Scheibe (10) nicht als Getriebegehäuseteil dient.

3. Getriebemotor (1) nach Anspruch 1, **dadurch gekennzeichnet, dass** die Scheibe (10) formschlüssig, z. B. durch einen Bajonettverschluss, mit dem Getriebegehäuse (8) verbunden ist.

4. Getriebemotor (1) nach Anspruch 1, **dadurch gekennzeichnet, dass** die Scheibe (10) einen äußeren Ringbereich (16) aufweist, in welchem Freisparungen (14) vorgesehen sind, durch welche Klemmzungen (12) begrenzt sind.

5. Getriebemotor (1) nach Anspruch 1 und 4, **dadurch gekennzeichnet, dass** die Scheibe (10) über die Klemmzungen (12) an einem Innenumfangsbereich (13) des Getriebegehäuses (8) verklemmt ist.

6. Getriebemotor (1) nach zumindest einem der vorangehenden Ansprüche, **dadurch gekennzeichnet, dass** die Scheibe (10) aus Metall oder Kunststoff besteht.

7. Getriebemotor (1) nach Anspruch 1 und mindestens einem der nachfolgenden Ansprüche, **dadurch gekennzeichnet, dass** das Hohlrad (7) mit dem Getriebegehäuse (8) einstückig ist.

8. Getriebemotor (1) nach Anspruch 5 und 7, **dadurch gekennzeichnet, dass** der Innenumfangsbereich (13) des Getriebegehäuses (8) verzahnungsfrei ist und durch eine Anschlagsfläche (31) axial begrenzt ist.

9. Getriebemotor (1) nach zumindest einem der vorangehenden Ansprüche, **dadurch gekennzeichnet, dass** die Planetenräder (6) auf dem Planetenträger (19) gelagert sind, welcher eine zentrale Lagerausnehmung (20) aufweist und auf den Durchmesser der Motorwelle (3) angepasst ist.

10. Getriebemotor (1) nach Anspruch 9, **dadurch gekennzeichnet, dass** die Motorwelle (3) sich über das Sonnenrad (5) hinaus innerhalb der Lagerausnehmung (20) des Planetenträgers (19) erstreckt.

11. Getriebemotor (1) nach zumindest einem der vorangehenden Ansprüche, **dadurch gekennzeichnet, dass** der Planetenträger (19) mit einem Sekundärsonnenrad (21) einstückig ist, welches mit Sekundärplanetenrädern (22) in Eingriff ist und die Sekundärplanetenräder (22) mit der Verzahnung (23) des Hohlrades (7) in Eingriff sind.

12. Getriebemotor (1) nach Anspruch 11, **dadurch gekennzeichnet, dass** die Sekundärplanetenräder (22) auf einem Sekundärplanetenträger (24) gelagert sind, welcher einstückig mit der Getriebeausgangswelle (9) ist.

13. Getriebemotor (1) nach zumindest einem der vorangehenden Ansprüche, **dadurch gekennzeichnet, dass** die Getriebeausgangswelle (9) in einer mit dem Getriebegehäuse (8) einstückigen Lagerhülse (25) gelagert ist und die Länge einer ringförmigen Lagerfläche größer als der Durchmesser der Getriebeausgangswelle (9) ist.

14. Getriebemotor (1) nach zumindest einem der vorangehenden Ansprüche, **dadurch gekennzeichnet, dass** das Getriebegehäuse (8) einstückig mit Schnappmitteln ist.

15. Getriebemotor (1) nach Anspruch 14, **dadurch gekennzeichnet, dass** die Schnappmittel in Form von rahmenartigen Schnappfenstern (26) ausgebildet sind.

16. Getriebemotor (1) nach zumindest einem der vorangehenden Ansprüche, **dadurch gekennzeichnet, dass** der Elektromotor mit einem Adapter (28) verbunden ist, welcher mit Schnappmitteln einstückig ist.

17. Getriebemotor (1) nach Anspruch 16, **dadurch gekennzeichnet, dass** die Schnappmittel als Schnappnasen (27) ausgebildet sind, die am Umfang des Adapters (28) angeordnet sind und mit den Schnappfenstern (26) des Getriebegehäuses (8) korrespondieren.

18. Getriebemotor (1) nach zumindest einem der Ansprüche 1 bis 13, **dadurch gekennzeichnet, dass** das Getriebegehäuse (8) mit dem Adapter (28) verschweißt ist.

19. Verfahren zur Montage des Getriebemotors (1) nach Anspruch 1, wobei das Getriebegehäuse (8) mit dem Hohlrad (7) einstückig ist und die Getriebeausgangswelle (9) mit dem Planetenträger (24) einstückig ist, enthaltend folgende Verfahrensschritte: a) Bereitstellen des Getriebegehäuses (8), der Getriebeausgangswelle (9), den Planetenrädern (6), des Sonnenrads (5) und der Scheibe (10); b) axiale Montage der Getriebeausgangswelle (9) in das Getriebegehäuse (8); c) axiale Montage der Planetenräder (6) auf den Planetenträger (24) und in das Hohlrad (7) des Getriebegehäuses (8); d) axiale Montage des Sonnenrads (5) und in Eingriff bringen mit den Planetenrädern (6); e) Montage der Scheibe (10) in das Getriebegehäuse (8); f) Finden der korrekten Winkellage zwischen Motorwelle (3) und Sonnenrad (5); g) Einführen der Motorwelle (3) in das Sonnenrad (5).

20. Verfahren nach Anspruch 19, wobei die Motorwelle (3) über das Sonnenrad (5) hinaus in eine Lagerausnehmung (20) des Planetenträgers (19) eingeführt wird.

21. Verfahren nach Anspruch 19 oder 20, wobei das Getriebegehäuse (8) mit einem Adapter (28) oder einem Motorgehäuse mechanisch verbunden wird.

22. Verfahren nach Anspruch 21, wobei das Getriebegehäuse (8) mit dem Adapter (28) oder dem Motorgehäuse verschnappt wird.

23. Verfahren nach Anspruch 22, wobei das Getriebegehäuse (8) mit dem Adapter (28) oder dem Motorgehäuse verschweißt wird.

24. Verfahren nach Anspruch 23, wobei das Getriebegehäuse (8) mit dem Adapter (28) oder dem Motorgehäuse laserverschweißt wird.

25. Verfahren nach Anspruch 19, 20, 21, 22, 23 oder 24,wobei zumindest eine weitere Planetengetriebestufe zwischen dem Sonnenrad (5) und der Getriebeausgangswelle (9) montiert wird, welche aus einem Planetenträger (19) mit einstückigem Sekundärsonnenrad (21) und Sekundärplanetenrädern (22) besteht.

## Claims

1. A geared motor (1), consisting of a direct current motor (2) with a motor shaft (3), a planetary gear (4) with a sun gear (5), a plurality of planet wheels (6), a ring gear (7), a gear housing (8), a gear output shaft (9) and a planetary carrier (24), wherein the planet wheels (6) engage teeth of the ring gear (7), the planetary gear (4) consists of one or a plurality of planetary gear stages, all sun gears (5, 21), all planet wheels (6, 22) and all planetary carriers (19, 24) are held axially in the gear housing (8) by a disc (10) provided with a shaft passage (11) and form a pre-assembly structural component, the sun gear (5) which is first at the side closest to the motor has a central shaft receiver (29) which is formed with a form-lock contour acting in the rotational direction and is coupled to the motor shaft (3) via a corresponding form-lock contour in a rotationally-fixed manner or while retaining rotational play and that teeth engagement of the first sun gear (5) with teeth of the first planet wheels (6) is produced in the pre-assembly structural component after final mounting of the direct current motor (2) on the pre-assembly structural component, **characterised in that** the disc (10) has an annular surface as a sun gear thrust surface (15) and the sun gear thrust surface (15) projects axially with respect to a ring surface (18) adjoining radially outwards.

2. A geared motor (1) according to claim 1, **characterised in that** the disc (10) does not serve as a gear housing part.

3. A geared motor (1) according to claim 1, **characterised in that** the disc (10) is connected to the gear housing (8) in a form-locked manner, e.g. by a bayonet catch.

4. A geared motor (1) according to claim 1, **characterised in that** the disc (10) has an outer ring region (16) in which there are provided recesses (14) which bound clamping tongues (12).

5. A geared motor (1) according to claim 1 and 4, **characterised in that** the disc (10) is clamped to an inner circumferential region (13) of the gear housing (8) via the clamping tongues (12).

6. A geared motor (1) according to at least one of the preceding claims, **characterised in that** the disc (10) is composed of metal or plastics material.

7. A geared motor (1) according to claim 1 and at least one of the following claims, **characterised in that** the ring gear (7) is integral with the gear housing (8).

8. A geared motor (1) according to claim 5 and 7, **characterised in that** the inner circumferential region (13) of the gear housing (8) is teeth-free and is bounded axially by a stop surface (31).

9. A geared motor (1) according to at least one of the preceding claims, **characterised in that** the planet wheels (6) are mounted on the planetary carrier (19) which has a central bearing cut-out (20) and is matched to the diameter of the motor shaft (3).

10. A geared motor (1) according to claim 9, **characterised in that** the motor shaft (3) extends within the bearing cut-out (20) of the planetary carrier (19), beyond the sun gear (5).

11. A geared motor (1) according to at least one of the preceding claims, **characterised in that** the planetary carrier (19) is integral with a secondary sun gear (21) which engages secondary planet wheels (22) and the secondary planet wheels (22) engage the teeth (23) of the ring gear (7).

12. A geared motor (1) according to claim 11, **characterised in that** the secondary planet wheels (22) are mounted on a secondary planetary carrier (24) which is integral with the gear output shaft (9).

13. A geared motor (1) according to at least one of the preceding claims, **characterised in that** the gear output shaft (9) is mounted in a bearing sleeve (25) integral with the gear housing (8) and the length of an annular bearing surface is greater than the diameter of the gear output shaft (9).

14. A geared motor (1) according to at least one of the preceding claims, **characterised in that** the gear housing (8) is integral with snap-on means.

15. A geared motor (1) according to claim 14, **characterised in that** the snap-on means are in the form of frame-like snap windows (26).

16. A geared motor (1) according to at least one of the preceding claims, **characterised in that** the electric motor is connected to an adapter (28) which is integral with snap-on means.

17. A geared motor (1) according to claim 16, **characterised in that** the snap-on means are in the form of snap lugs (27) which are arranged at the circumference of the adapter (28) and correspond to the snap windows (26) of the gear housing (8).

18. A geared motor (1) according to at least one of claims 1 to 13, **characterised in that** the gear housing (8) is welded to the adapter (28).

19. A method of mounting the geared motor (1) according to claim 1, wherein the gear housing (8) is integral with the ring gear (7) and the gear output shaft (9) is integral with the planetary carrier (24), comprising the following method steps: a) provision of the gear housing (8), the gear output shaft (9), the planet wheels (6), the sun gear (5) and the disc (10); b) axial mounting of the gear output shaft (9) in the gear housing (8); c) axial mounting of the planet wheels (6) on the planetary carrier (24) and into the ring gear (7) of the gear housing (8); d) axial mounting of the sun gear (5) and engagement with the planet wheels (6); e) mounting of the disc (10) in the gear housing (8); f) identification of the correct angular position between motor shaft (3) and sun gear (5); g) insertion of the motor shaft (3) into the sun gear (5).

20. A method according to claim 19, wherein the motor shaft (3) is inserted into a bearing cut-out (20) of the planetary carrier (19), beyond the sun gear (5).

21. A method according to claim 19 or 20, wherein the gear housing (8) is mechanically connected to an adapter (28) or a motor housing.

22. A method according to claim 21, wherein the gear housing (8) is snap-connected to the adapter (28) or the motor housing.

23. A method according to claim 22, wherein the gear housing (8) is welded to the adapter (28) or to the motor housing.

24. A method according to claim 23, wherein the gear housing (8) is laser-welded to the adapter (28) or to the motor housing.

25. A method according to claim 19, 20, 21, 22, 23 or 24, wherein at least one further planetary gear stage is mounted between the sun gear (5) and the gear output shaft (9), which consists of a planetary carrier (19) with integral secondary sun gear (21) and secondary planet wheels (22).

## Revendications

1. Motoréducteur (1), constitué d'un moteur à courant continu (2) avec un arbre de moteur (3), d'une boîte de vitesses à trains épicycloïdaux (4) avec un solaire (5), de plusieurs satellites (6), d'une couronne (7), d'un carter de transmission (8), d'un arbre de sortie de transmission (9) et d'un porte-satellite (24), dans lequel les satellites (6) sont en prise avec des dentures de la couronne (7), la boîte de vitesses à trains épicycloïdaux (4) est constituée d'un ou de plusieurs étages de boîte de vitesses à trains épicydoïdaux, tous les solaires (5, 21), tous les satellites (6, 22) et tous les porte-satellites (19, 24) sont retenus axialement dans le carter de transmission (8) par un disque (10) pourvu d'un passage d'arbre (11) et forment un module de pré-assemblage, le premier solaire (5) côté moteur présente un logement d'arbre (29) central, lequel est réalisé avec un contour de complémentarité de formes agissant dans la direction de rotation et est accouplé à l'arbre de moteur (3) de manière solidaire en rotation ou en laissant un jeu de rotation par l'intermédiaire d'un contour de complémentarité de formes correspondant et que dans le module de pré-assemblage après un montage final du moteur à courant continu (2) sur le module de pré-assemblage, une prise par denture du premier solaire (5) avec des dentures des premiers satellites (6) est donnée, **caractérisé en ce que** le disque (10) présente une surface annulaire en tant que surface d'appui de solaire (15) et la surface d'appui de solaire (15) fait saillie axialement par rapport à une surface annulaire (18) adjacente radialement à l'extérieur.

2. Motoréducteur (1) selon la revendication 1, **caractérisé en ce que** le disque (10) ne sert pas de pièce de carter de transmission.

3. Motoréducteur (1) selon la revendication 1, **caractérisé en ce que** le disque (10) est relié au carter de transmission (8) par complémentarité de formes, par exemple par une fermeture à baïonnette.

4. Motoréducteur (1) selon la revendication 1, **caractérisé en ce que** le disque (10) présente une zone annulaire extérieure (16), dans laquelle des évidements (14) sont prévus, par lesquels des languettes de serrage (12) sont délimitées.

5. Motoréducteur (1) selon la revendication 1 et 4, **caractérisé en ce que** le disque (10) est serré sur une zone périphérique intérieure (13) du carter de transmission (8) par l'intermédiaire des languettes de serrage (12).

6. Motoréducteur (1) selon au moins l'une des revendications précédentes, **caractérisé en ce que** le disque (10) est constitué de métal ou matière plastique.

7. Motoréducteur (1) selon la revendication 1 et au moins l'une des revendications suivantes, **caractérisé en ce que** la couronne (7) est d'une seule pièce avec le carter de transmission (8).

8. Motoréducteur (1) selon la revendication 5 et 7, **caractérisé en ce que** la zone périphérique intérieure (13) du carter de transmission (8) est exempte de dentures et est délimitée axialement par une surface de butée (31).

9. Motoréducteur (1) selon au moins l'une des revendications précédentes, **caractérisé en ce que** les satellites (6) sont montés sur le porte-satellite (19), lequel présente un évidement de palier (20) central et est adapté au diamètre de l'arbre de moteur (3).

10. Motoréducteur (1) selon la revendication 9, **caractérisé en ce que** l'arbre de moteur (3) s'étend au-delà du solaire (5) à l'intérieur de l'évidement de palier (20) du porte-satellite (19).

11. Motoréducteur (1) selon au moins l'une quelconque des revendications précédentes, **caractérisé en ce que** le porte-satellite (19) est d'une seule pièce avec un solaire secondaire (21), lequel est en prise avec des satellites secondaires (22) et les satellites secondaires (22) sont en prise avec la denture (23) de la couronne (7).

12. Motoréducteur (1) selon la revendication 11, **caractérisé en ce que** les satellites secondaires (22) sont logés sur un porte-satellite secondaire (24), lequel est d'une seule pièce avec l'arbre de sortie de transmission (9).

13. Motoréducteur (1) selon au moins l'une des revendications précédentes, **caractérisé en ce que** l'arbre de sortie de transmission (9) est logé dans une douille de palier (25) d'une seule pièce avec le carter de transmission (8) et la longueur d'une surface de support annulaire est plus grande que le diamètre de l'arbre de sortie de transmission (9).

14. Motoréducteur (1) selon au moins l'une des revendications précédentes, **caractérisé en ce que** le carter de transmission (8) est d'une seule pièce avec des moyens d'encliquetage.

15. Motoréducteur (1) selon la revendication 14, **caractérisé en ce que** les moyens d'encliquetage sont réalisés sous forme de fenêtres d'encliquetage (26) du type cadre.

16. Motoréducteur (1) selon au moins l'une des revendications précédentes, **caractérisé en ce que** le moteur électrique est relié à un adaptateur (28), lequel est d'une seule pièce avec les moyens d'encliquetage.

17. Motoréducteur (1) selon la revendication 16, **caractérisé en ce que** les moyens d'encliquetage sont réalisés en tant que taquets d'encliquetage (27), qui sont disposés à la périphérie de l'adaptateur (28) et correspondent avec les fenêtres d'encliquetage (26) du carter de transmission (8).

18. Motoréducteur (1) selon au moins l'une quelconque des revendications 1 à 13, **caractérisé en ce que** le carter de transmission (8) est soudé à l'adaptateur (28).

19. Procédé pour le montage du motoréducteur (1) selon la revendication 1, dans lequel le carter de transmission (8) est d'une seule pièce avec la couronne (7) et l'arbre de sortie de transmission (9) est d'une seule pièce avec le porte-satellite (24), contenant les étapes de procédé suivantes : a) la fourniture du carter de transmission (8), de l'arbre de sortie de transmission (9), des satellites (6), du solaire (5) et du disque (10) ; b) le montage axial de l'arbre de sortie de transmission (9) dans le carter de transmission (8) ; c) le montage axial des satellites (6) sur le porte-satellite (24) et dans la couronne (7) du carter de transmission (8) ; d) le montage axial du solaire (5) et l'amenée en prise avec les satellites (6) ; e) le montage du disque (10) dans le carter de transmission (8) ; f) le fait de trouver la position angulaire correcte entre l'arbre de moteur (3) et le solaire (5) ; g) l'introduction de l'arbre de moteur (3) dans le solaire (5).

20. Procédé selon la revendication 19, dans lequel l'arbre de moteur (3) est introduit au-delà du solaire (5) dans un évidement de palier (20) du porte-satellite (19).

21. Procédé selon la revendication 19 ou 20, dans lequel le carter de transmission (8) est relié mécaniquement à un adaptateur (28) ou un carter de moteur.

22. Procédé selon la revendication 21, dans lequel le carter de transmission (8) est encliqueté avec l'adaptateur (28) ou le carter de moteur.

23. Procédé selon la revendication 22, dans lequel le carter de transmission (8) est soudé à l'adaptateur (28) ou au carter de moteur.

24. Procédé selon la revendication 23, dans lequel le carter de transmission (8) est soudé au laser à l'adaptateur (28) ou au carter de moteur.

25. Procédé selon la revendication 19, 20, 21, 22, 23 ou 24, dans lequel au moins un autre étage de boîte de vitesses à trains épicycloïdaux est monté entre le solaire (5) et l'arbre de sortie de transmission (9), lequel est constitué d'un porte-satellite (19) avec un solaire secondaire (21) d'une seule pièce et des satellites secondaires (22).
